(19) **Europäisches Patentamt European Patent Office Office européen des brevets**

(11) **EP 4 692 279 A1**

(12) **EUROPEAN PATENT APPLICATION**
published in accordance with Art. 153(4) EPC

(43) Date of publication:
**11.02.2026  Bulletin 2026/07**

(21) Application number: **24779364.9**

(22) Date of filing: **11.03.2024**

(51) International Patent Classification (IPC):
$C09K\ 11/84^{(2006.01)}$    $C04B\ 35/50^{(2006.01)}$
$C09K\ 11/00^{(2006.01)}$    $C09K\ 11/08^{(2006.01)}$
$G01T\ 1/20^{(2006.01)}$     $G21K\ 4/00^{(2006.01)}$

(52) Cooperative Patent Classification (CPC):
**C04B 35/50; C09K 11/00; C09K 11/08;**
**C09K 11/77; G01T 1/20; G21K 4/00**

(86) International application number:
**PCT/JP2024/009361**

(87) International publication number:
**WO 2024/203234 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023  JP 2023059275**

(71) Applicant: **Niterra Materials Co., Ltd.**
**Yokohama-shi, Kanagawa 235-0032 (JP)**

(72) Inventors:
• **TAKANO, Hiroaki**
  **Yokohama-shi, Kanagawa 235-0032 (JP)**
• **OYAIZU, Eiji**
  **Yokohama-shi, Kanagawa 235-0032 (JP)**
• **ADACHI, Yoshitaka**
  **Yokohama-shi, Kanagawa 235-0032 (JP)**
• **HAYASHI, Makoto**
  **Yokohama-shi, Kanagawa 235-0032 (JP)**
• **ROKUTANDA, Takashi**
  **Yokohama-shi, Kanagawa 235-0032 (JP)**

(74) Representative: **Hoffmann Eitle**
**Patent- und Rechtsanwälte PartmbB**
**Arabellastraße 30**
**81925 München (DE)**

(54) **CERAMIC SCINTILLATOR, CERAMIC SCINTILLATOR PRODUCTION METHOD, RADIATION DETECTOR, AND RADIOLOGICAL EXAMINATION DEVICE**

(57)    A ceramic scintillator of an embodiment includes a sintered body of a gadolinium oxysulfide phosphor containing praseodymium as a main activator. When a body color of the sintered body is represented by chromaticity coordinates (x, y) based on a CIE1931 chromaticity value, the sintered body has a body color satisfying $0.4 \le x \le 0.505$ ...(1) and $0.83x + 0.075 \le y \le 0.83x + 0.095$ ...(2). The ceramic scintillator of the embodiment is obtained by a method for manufacturing a ceramic scintillator, the method including a heat treatment step of causing a reaction gas containing oxygen and sulfur to react with the sintered body. A heat treatment time in the heat treatment step is 1 hour or more and 50 hours or less.

*Fig. 1*

**Description**

TECHNICAL FIELD

Embodiments according to the present invention relate to a ceramic scintillator, a method for manufacturing a ceramic scintillator, a radiation detector, and a radiation test device.

BACKGROUND ART

In a field of medical diagnosis, industrial non-destructive test, or the like, a test using a radiation test device such as an X-ray tomography device (hereinafter, referred to as an "X-ray CT device") is performed. The X-ray CT device includes an X-ray tube (X-ray source) that emits a fan-shaped fan beam X-ray, and an X-ray detector in which a plurality of X-ray detection elements are arranged in parallel, and has a structure in which the X-ray tube and the X-ray detector are arranged to face each other such that a tomographic plane of a test object is located at a center. In the X-ray CT device, a test object is irradiated with a fan beam X-ray while the X-ray tube and the X-ray detector are rotated, an intensity of the X-ray that has passed through the test object is measured by the X-ray detector, and X-ray absorption data is collected. Thereafter, the obtained X-ray absorption data is analyzed by a computer to reproduce a tomographic image of the test object.

As the X-ray detector of the X-ray CT device, a detector using a solid scintillator that emits visible light or the like by X-ray stimulation as a detection element is frequently used. In the X-ray detector using the solid scintillator, it is easy to downsize the X-ray detection element and to increase the number of channels, and therefore resolution of the X-ray CT device can be further enhanced. Various substances are known as the solid scintillator, and in particular, a ceramic scintillator made of a sintered body of a rare earth oxysulfide such as $Gd_2O_2S$:Pr (see, for example, Patent Literature 1) is suitable as a scintillator material for the X-ray detector because of its large X-ray absorption coefficient, excellent luminous efficiency, and short afterglow.

For example, a scintillator piece obtained by sintering a rare earth oxysulfide phosphor powder by applying a hot press method, a hot isostatic pressing (HIP) method, or the like, and cutting the obtained high-density sintered body into a desired shape and size by a blade saw, a wire saw, or the like is used as this type of ceramic scintillator.

CITATION LIST

PATENT LITERATURE

Patent Literature 1: JP S58-204088 A
Patent Literature 2: JP H6-201834 A
Patent Literature 3: JP 2000-171563 A

SUMMARY OF THE INVENTION

OBJECT OF THE INVENTION

A ceramic scintillator is required to have transparency in order to obtain high detection sensitivity. However, when a rare earth oxysulfide phosphor powder is merely sintered, distortion occurs inside the sintered body due to pressure during sintering, a composition of the sintered body is slightly deviated from a stoichiometric ratio, and therefore the sintered body is often colored in a dark color. Furthermore, when a scintillator piece is cut out from the sintered body, a crystal on a cut surface is crushed, and therefore a crushed layer of about 3 $\mu$m or more and 5 $\mu$m or less from the surface may be generated, or a colored layer may be generated due to pressure at the time of cutting. The internal distortion of the sintered body, the internal coloring caused by compositional variation, or the crushed layer or colored layer generated at the time of cutting may decrease a light output and stability of the ceramic scintillator, and may increase an afterglow time.

Therefore, in a conventional ceramic scintillator manufacturing process, after a scintillator piece or the like is cut out from a rare earth oxysulfide sintered body, a heat treatment is performed in various atmospheres (see, for example, Patent Literatures 2 and 3). Out of these, Patent Literature 3 describes a technique in which a rare earth oxysulfide sintered body and an oxysulfide powder are housed in a substantially sealed container, the container is disposed in a normal air atmosphere firing furnace and heat-treated at a temperature of 900°C or more and 1200°C or less, and sulfur and oxygen (for example, $SO_2$ or $SO_3$) generated by decomposition of the oxysulfide powder during this heat treatment are caused to react with the rare earth oxysulfide sintered body, thereby removing coloring and internal distortion of the sintered body.

The ceramic scintillator heat treatment method described in Patent Literature 3 is recognized to have an effect on removal of internal coloring of a sintered body or a colored layer and the like generated at the time of cutting. However, when a particle size of the rare earth oxysulfide phosphor powder as a starting material is large, coloring (particularly, internal coloring) cannot be completely removed at a temperature of 900°C or more and 1200°C or less, and there is a possibility that afterglow cannot be sufficiently shortened. As a result, a pseudo image (artifact) may be generated in an image obtained by an X-ray CT device or the like, and there is room for improvement.

Generally, for removing internal coloring of a ceramic scintillator, it is effective to increase a heat treatment temperature. However, in the heat treatment method described in Patent Literature 3, when the heat treatment is performed at a temperature exceeding 1200°C, a reaction between the sintered body and oxygen contained in a considerable amount in an air atmosphere in the furnace is rapidly activated, whereby a surface of the sintered body is whitened by oxidation, and a light output of the ceramic scintillator may decrease.

As described above, in the ceramic scintillator, suppression of internal coloring and suppression of whitening of a surface are in a trade-off relationship, and it is difficult to achieve both suppression of an increase in afterglow time and suppression of a decrease in light output.

An embodiment according to the present invention provides a ceramic scintillator that suppresses a decrease in light output while suppressing an increase in afterglow time.

SOLUTION TO PROBLEM

The above problem is solved by the following embodiments.

<1> A ceramic scintillator including a sintered body of a gadolinium oxysulfide phosphor containing praseodymium as a main activator, wherein
when a body color of the sintered body is represented by chromaticity coordinates (x, y) based on a CIE1931 chromaticity value, the sintered body has a body color satisfying

$$0.4 \leq x \leq 0.505 \ldots (1)$$

and

$$0.83x + 0.075 \leq y \leq 0.83x + 0.095 \ldots (2).$$

<2> The ceramic scintillator according to <1>, wherein
when a body color of the sintered body is represented by chromaticity coordinates (x, y) based on a CIE1931 chromaticity value, the sintered body has a body color further satisfying

$$0.4 \leq x \leq 0.42 \ldots (1a)$$

and

$$0.83x + 0.075 \leq y \leq 0.83x + 0.095 \ldots (2).$$

<3> The ceramic scintillator according to <1> or <2>, wherein
the gadolinium oxysulfide phosphor has a composition represented by

$$\text{general formula: } (Gd_{1-a-b}Pr_aCe_b)_2O_2S \qquad (A)$$

(In the formula, a is a number satisfying $0.0001 \leq a \leq 0.01$, and b is a number satisfying $0 \leq b \leq 0.005$.).

<4> A method for manufacturing the ceramic scintillator according to any one of <1> to <3>, the method including a heat treatment step of causing a reaction gas containing oxygen and sulfur to react with the sintered body inside a heating furnace in an air atmosphere, wherein
a heat treatment time in the heat treatment step is 1 hour or more and 50 hours or less.

<5> The method for manufacturing a ceramic scintillator according to <4>, wherein
the heat treatment step is performed at a temperature in a range of 900°C or more and 1600°C or less.

<6> The method for manufacturing a ceramic scintillator according to <4> or <5>, wherein
the heat treatment step is performed at a temperature in a range of more than 1100°C and less than 1300°C.

<7> The method for manufacturing a ceramic scintillator according to any one of <4> to <6>, wherein
the heat treatment step is performed while the sintered body and an oxysulfide powder are housed inside a container.
<8> The method for manufacturing a ceramic scintillator according to <7>, wherein

the container has a double or more structure including a first container and a second container inside the first container, and
the heat treatment step is performed while the sintered body is housed inside the second container, and the oxysulfide powder is housed outside the second container and inside the first container.

<9> The method for manufacturing a ceramic scintillator according to <7> or <8>, wherein
the oxysulfide powder is a gadolinium oxysulfide powder.
<10> A radiation detector including the ceramic scintillator according to any one of <1> to <3>.
<11> A radiation test device including the radiation detector according to <10>.

BRIEF DESCRIPTION OF DRAWINGS

[Fig. 1] Fig. 1 is a graph obtained by plotting body colors of sintered bodies constituting ceramic scintillators of Examples and Comparative Examples on xy chromaticity coordinates.
[Fig. 2] Fig. 2 is a schematic configuration diagram illustrating a state when a heat treatment step is performed using a container having a double structure in a manufacturing method of an embodiment.
[Fig. 3] Fig. 3 is a schematic configuration diagram illustrating an X-ray detector which is an example of a radiation detector of an embodiment.
[Fig. 4] Fig. 4 is a schematic configuration diagram illustrating an X-ray CT device which is an example of a radiation test device of an embodiment.

DESCRIPTION OF EMBODIMENTS

Hereinafter, embodiments will be described with reference to the drawings. The drawings are schematic diagrams illustrating the embodiments and promoting understanding of the embodiments, and their shapes, dimensions, ratios, and the like may be different from actual ones, but these can be appropriately changed in design in consideration of the following description and known techniques.

<Ceramic scintillator>

A ceramic scintillator of an embodiment includes a sintered body of a gadolinium oxysulfide phosphor containing praseodymium (Pr) as a main activator. In the gadolinium oxysulfide phosphor, in addition to Pr as a main activator, a small amount of cerium (Ce) which exhibits an effect of suppressing afterglow may be contained as a co-activator. Examples of such a gadolinium oxysulfide phosphor include

a phosphor having a composition represented by

$$\text{general formula: } (Gd_{1-a-b}Pr_aCe_b)_2O_2S \ ... \qquad (A)$$

(in the formula, a is a number satisfying $0.0001 \leq a \leq 0.01$, and b is a number satisfying $0 \leq b \leq 0.005$). Note that a part of Gd may be replaced with another rare earth element (at least one element selected from Y, La, and Lu, or the like), and a replacement amount at this time is preferably 30 mol% or less.

The gadolinium oxysulfide phosphor containing Pr as a main activator has a large X-ray absorption coefficient and can obtain an excellent light output, and thus is particularly effective as a fluorescent material of a radiation detector.
The content of Pr as a main activator is preferably in a range of 0.0001 or more and 0.01 or less as a value of a in the general formula (A). When the value of a indicating the Pr content is less than 0.0001, an effect as a main activator cannot be sufficiently obtained, and luminous efficiency tends to decrease. On the other hand, even when the value of a exceeds 0.01, luminous efficiency tends to decrease. The value of a indicating the Pr content is more preferably 0.0002 or more and 0.005 or less.
The content of Ce as a co-activator is preferably 0.005 or less as a value of b in the general formula (A). When the value of b indicating the Ce content exceeds 0.005, conversely, a light output may decrease, and thus attention needs to be paid.

In the ceramic scintillator of the embodiment, when a body color of the above-described sintered body of the gadolinium oxysulfide phosphor (hereinafter, simply referred to as a "sintered body") is represented by chromaticity coordinates (x, y) based on a CIE1931 chromaticity value, the sintered body has a body color satisfying chromaticity coordinates of

$$0.4 \leq x \leq 0.505 \quad ...(1)$$

and

$$0.83x + 0.075 \leq y \quad ...(2\text{-}1).$$

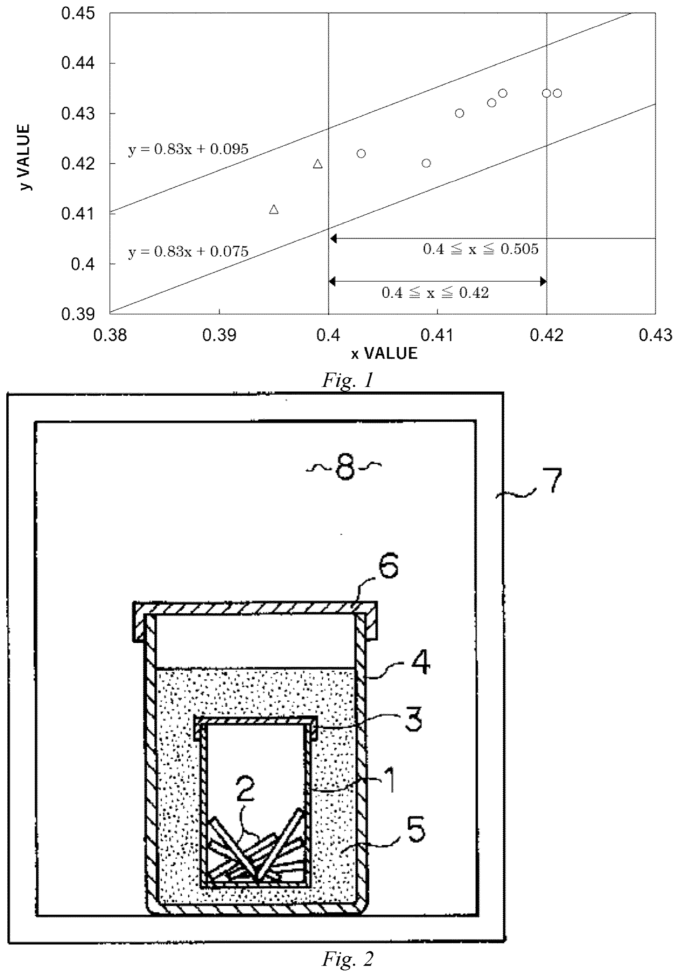

Fig. 1 is a graph obtained by measuring body colors of sintered bodies constituting ceramic scintillators of Examples 1 to 7 and Comparative Examples 1 and 2 described later and plotting xy chromaticity coordinates of the body colors. The body color of the sintered body in the embodiment indicates xy chromaticity of a 10° field of view. The xy chromaticity is measured by using a spectrophotometer CM-3500d (product name, manufactured by Minolta), selecting a D65 light source as irradiation light, and adopting a specular component included method and a measurement diameter of 8 mm. A surface of a measurement sample is polished with a polishing agent having a count of 700 or more, and a thickness thereof is set to 1.0 mm ± 0.1 mm. The measurement sample is disposed in close contact with a window of the spectrometer, and an inner black cylindrical box called a zero calibration box is disposed on a side of the measurement sample opposite to the window of the spectrometer. The body color of the sintered body in the embodiment indicates an xy chromaticity value measured in this manner.

As described above, the fact that the sintered body has a body color satisfying the chromaticity coordinates represented by the above formulas (1) and (2-1) (yellow or pale orange with high transparency) means that internal coloring of the sintered body, which causes an increase in afterglow time, is sufficiently removed, and whitening of a surface of the sintered body, which decreases a light output, does not occur. Therefore, by using a sintered body having such a body color, it is possible to provide a ceramic scintillator having an excellent light output and a short afterglow time with good reproducibility.

When the x value in the xy chromaticity coordinates indicating the body color of the sintered body is less than 0.4, opacity (degree of white) is enhanced. In a ceramic scintillator using such an opaque sintered body, light scattering occurs, and therefore a light output at the time of irradiation with an X-ray or the like decreases. Various factors can be considered for opacifying the sintered body, and in particular, examples thereof include whitening caused by oxidation of a surface of the sintered body. In the embodiment, a body color having high transparency can be obtained with good reproducibility by preventing oxidation of a surface of the sintered body on the basis of, for example, a manufacturing method described later.

In addition, out of the xy chromaticity coordinates indicating the body color of the sintered body, the fact that the y value is smaller than a value of the above formula (2-1) ($0.83x + 0.075 > y$: chromaticity below the straight line of $y = 0.83x + 0.075$ in Fig. 1) means that a color tone of the entire sintered body is dark. This means that coloring (particularly, internal coloring) that has occurred during sintering or processing of the sintered body is not sufficiently removed. In a ceramic scintillator using such a sintered body, an afterglow time increases.

In other words, in a sintered body in which the y value satisfies the above formula (2-1) (sintered body having chromaticity on or above the straight line of $y = 0.83x + 0.075$ in Fig. 1), since internal coloring is sufficiently removed, an afterglow time of a ceramic scintillator can be sufficiently shortened. Note that, also in a sintered body of a gadolinium oxysulfide phosphor activated with Ce in addition to Pr, since the y value of the body color satisfies the above formula (2-1), it is possible to obtain a ceramic scintillator having a sufficiently short afterglow time.

In the xy chromaticity coordinates, a sum (x + y) of the x value and the y value is 1 or less. A maximum value of the x value when the above formula (2-1) is satisfied and $x + y \leq 1$ is satisfied is about 0.505. Therefore, an upper limit of the x value of the xy chromaticity coordinates in the embodiment is 0.505 as expressed by the above formula (1).

An upper limit of the y value of the xy chromaticity coordinates is not necessarily limited. The fact that the y value becomes larger while the x value of the xy chromaticity coordinates is within the range of the above formula (1) means that a color tone of green becomes stronger. The gadolinium oxysulfide phosphor activated with Pr has a green emission spectrum, and a light output of the ceramic scintillator does not decrease so much even if the green color tone becomes strong in the body color of the sintered body.

In the body color of the sintered body, the green color tone mainly depends on a Pr concentration. Therefore, in consideration of a practical Pr concentration and in order to obtain a scintillator with a higher output, the y value of the body color of the sintered body preferably satisfies $y \leq 0.83x + 0.095 ...(2\text{-}2)$. That is, the sintered body in the embodiment has a body color satisfying the x value of the above formula (1), and

$$0.83x + 0.075 \leq y \leq 0.83x + 0.095 \quad \ldots(2).$$

Examples of a sintered body having no body color satisfying the y value of the above formula (2) include a sintered body in which impurities contained therein are partially segregated. In particular, when an element that causes coloring or the like is segregated in a sintered body, performance as a scintillator may vary.

In the ceramic scintillator of the embodiment, as described above, Ce may be added to the gadolinium oxysulfide phosphor, or does not have to be added thereto. When Ce is not added, an afterglow time can be sufficiently shortened by sufficiently removing internal coloring of the sintered body.

By not adding Ce to the gadolinium oxysulfide phosphor, homogeneous material characteristics are easily obtained, and a light output can be improved. Therefore, when a gadolinium oxysulfide phosphor to which Ce is not added is used in a radiation test device described later, it is easy to obtain an image with high resolution even with a small X-ray dose. A ceramic scintillator to which Ce is not added can suppress an exposure dose of a test object, and thus can be suitably used for an X-ray test device for medical diagnosis.

On the other hand, when Ce is added to the gadolinium oxysulfide phosphor, an afterglow time can be further shortened. Therefore, when the gadolinium oxysulfide phosphor to which Ce is added is used in a radiation test device described later, it is easy to obtain an image with high resolution even when continuous irradiation of a large amount of X-ray is performed. A ceramic scintillator to which Ce is added can be suitably used for an X-ray non-destructive test device for industrial use.

In a body color of a sintered body to which Ce is not added, the x value of the xy chromaticity coordinates decreases as compared with a case where Ce is added. Therefore, in the embodiment, it is preferable to satisfy the x value of

$$0.4 \leq x \leq 0.42 \quad \ldots(1a).$$

When the x value of the xy chromaticity coordinates indicating the body color of the sintered body satisfies the above formula (1a), a particularly large light output can be obtained with good reproducibility. That is, in the ceramic scintillator of the embodiment, the sintered body preferably has a body color satisfying the above formulas (1a) and (2).

When a heat treatment time in a heat treatment step described later is short, the x value tends to decrease to 0.42 or less. The x value preferably satisfies the above formula (1a) from a viewpoint of increasing a rotation ratio of a heating furnace by shortening the heat treatment time to prevent an increase in manufacturing cost.

The x value of the xy chromaticity coordinates indicating the body color of the sintered body is preferably 0.407 or more from a viewpoint of obtaining a larger light output.

A color difference of the sintered body is preferably small. For example, a difference between an x value at an arbitrary position on a measurement surface of the xy chromaticity coordinates and an x value at an arbitrary position 5 mm or more away from the position is preferably 0.01 or less. In addition, a difference between a y value at an arbitrary position on the measurement surface of the xy chromaticity coordinates and a y value at an arbitrary position 5 mm or more away from the position is also preferably 0.01 or less.

For example, a difference between an x value at an arbitrary position on the measurement surface of the xy chromaticity coordinates and an x value at an arbitrary position on a surface opposite to the measurement surface is preferably 0.01 or less. In addition, a difference between a y value at an arbitrary position on the measurement surface of the xy chromaticity coordinates and a y value at an arbitrary position on a surface opposite to the measurement surface is also preferably 0.01 or less.

By controlling the color difference to be small at any measurement position, it is possible to suppress a partial variation in performance of the scintillator.

In the sintered body constituting the ceramic scintillator of the embodiment, characteristics other than the body color are preferably equal to or more than those of a conventional ceramic scintillator. For example, a sintered body density that affects a light transmittance is preferably 99.5% or more in terms of relative density (density ratio to true density). When a relative density of a Pr activated gadolinium oxysulfide sintered body is less than 99.5%, light scattering is likely to occur, therefore a light transmittance or a light output of the ceramic scintillator may decrease, and thus attention needs to be paid.

<Method for manufacturing ceramic scintillator>

Next, details of a method for manufacturing the ceramic scintillator of the embodiment will be described. The manufacturing method of the embodiment is suitable for manufacture of the above-described ceramic scintillator, but is not necessarily limited thereto, and can be applied to manufacture of ceramic scintillators including sintered bodies of various rare earth oxysulfide phosphors.

In the manufacturing method of the embodiment, first, a gadolinium oxysulfide phosphor powder which is a raw material of a sintered body is prepared. That is, a predetermined amount of each rare earth element such as Gd, Pr, or Ce is weighed, and these elements are sufficiently mixed. At this time, for example, an oxide such as gadolinium oxide or praseodymium oxide is used as each starting material. As a mixture of these starting materials, it is preferable to use a uniform mixed oxide obtained by firing an oxalic acid coprecipitate or the like.

Next, a sulfurizing agent such as a sulfur (S) powder and a flux such as $A_3PO_4$ or $A_2CO_3$ (A is at least one element selected from Li, Na, K, Rb, and Cs) are blended and sufficiently mixed with the obtained mixture. Such a mixed powder is fired at a temperature of 1100°C or more and 1300°C or less for 5 hours or more and 10 hours or less, and then washed with an acid and water to obtain a gadolinium oxysulfide phosphor powder.

The gadolinium oxysulfide phosphor powder thus obtained is used as a raw material of a sintered body to be a constituent material of a ceramic scintillator. In the embodiment, an average particle size of the gadolinium oxysulfide phosphor powder is not particularly limited, but when the average particle size is too small, it is difficult to prepare a large-sized sintered body, and when the average particle size is too large, it is necessary to increase a temperature to a higher temperature during sintering. From such a viewpoint, the average particle size of the gadolinium oxysulfide phosphor powder is, for example, preferably 1 μm or more and 50 μm or less, and more preferably 5 μm or more and 20 μm or less.

Furthermore, in the embodiment, even when a gadolinium oxysulfide phosphor powder having an average particle size of 20 μm or more is used, internal coloring of a sintered body can be favorably removed by a heat treatment described later. In other words, even when a light output is improved using a gadolinium oxysulfide phosphor powder having a relatively large average particle size, an afterglow time caused by internal coloring or the like can be sufficiently shortened.

Next, the gadolinium oxysulfide phosphor powder is sintered to prepare a sintered body as a constituent material of a ceramic scintillator. In sintering the gadolinium oxysulfide phosphor powder, a known sintering method such as hot pressing or HIP can be applied. In particular, it is preferable to perform sintering by applying the HIP method from a viewpoint of easily obtaining a particularly high-density sintered body.

Sintering to which the HIP method is applied is performed, for example, by first molding a gadolinium oxysulfide phosphor powder into an appropriate shape by a rubber press, filling and sealing the powder in a metal container or the like, and subjecting the powder to a HIP treatment. As HIP conditions at this time, preferably, a HIP temperature is 1300°C or more and 1600°C or less, a HIP pressure is 98 MPa or more, and a HIP time is 1 hour or more and 10 hours or less. The HIP temperature is more preferably 1350°C or more and 1600°C or less. By performing the HIP treatment under such conditions, for example, a sintered body having a relative density of 99.5% or more can be obtained with good reproducibility. When the relative density of the sintered body is less than 99.5%, characteristics such as a light transmitting property or a light output required for the ceramic scintillator cannot be satisfied.

Next, the obtained sintered body is cut into a desired shape and size by a blade saw, a wire saw, or the like to obtain a scintillator piece or the like.

In the sintered body, internal coloring may occur due to internal distortion caused by pressure during sintering, or due to slight deviation of a composition of the sintered body from a stoichiometric ratio. Furthermore, when the scintillator piece or the like is cut out from the sintered body, a colored layer may be generated on a surface due to pressure or the like at the time of cutting. These coloring phenomena decrease a light output, stability, or the like of the ceramic scintillator, and increase an afterglow time.

Therefore, after the sintered body is cut out into a desired shape, a heat treatment for the purpose of recovering a light output, removing coloring, and the like is performed. This heat treatment step is, for example, a step of causing a reaction gas containing oxygen and sulfur to react with the sintered body after cutting inside a heating furnace in an air atmosphere. Specifically, a sealable container is disposed in a furnace in an air atmosphere, and a reaction gas containing oxygen and sulfur is caused to react with the sintered body after cutting in the container.

In the manufacturing method of the embodiment, an inert gas atmosphere such as a nitrogen gas or an argon gas may be used instead of the air atmosphere inside the heating furnace. Note that it is preferable to set the inside of the heating furnace to an air atmosphere from a viewpoint of no necessity of replacing the inside of the heating furnace with a flow of an inert gas and prevention of an increase in manufacturing cost.

The heat treatment is preferably performed at a temperature in a range of 900°C or more and 1600°C or less. As a result, internal distortion of the sintered body generated during sintering is alleviated, and oxygen deficiency and sulfur deficiency can be filled, and therefore internal coloring of the sintered body can be removed. Furthermore, the colored layer and the like generated at the time of cutting can be removed at the same time.

When the heat treatment temperature is less than 900°C, oxygen and sulfur are not sufficiently diffused into the sintered body, and there is a possibility that an effect of removing internal coloring cannot be sufficiently obtained. On the other hand, when the heat treatment temperature exceeds 1600°C, there is a possibility that crystal grains of the sintered body are coarse and a processed shape cannot be maintained.

In the manufacturing method of the embodiment, even when the heat treatment temperature is set to a high temperature exceeding, for example, 1100°C, a surface of the sintered body is not oxidized, and therefore whitening of the surface of the sintered body, which causes a decrease in light output, can be prevented. Therefore, it is possible to provide a ceramic scintillator having an excellent light output, excellent stability, and the like and a short afterglow time with good reproducibility.

In particular, in the manufacturing method of the embodiment, it is preferable to perform the heat treatment at a temperature more than 1100°C and less than 1300°C.

A heat treatment time is appropriately set according to a heat treatment temperature, a state of a sintered body to be treated, a concentration of a reaction gas, the type of the reaction gas, and the like, but is practically preferably in a range of 1 hour or more and 50 hours or less. When the heat treatment time is less than 1 hour, internal coloring cannot be sufficiently removed in some cases. On the other hand, even if the heat treatment time is set to more than 50 hours, no further effect can be obtained, leading to an increase in manufacturing cost. In particular, in the manufacturing method of the embodiment, the heat treatment time is preferably 3 hours or more and 14 hours or less, and more preferably 5 hours or more and 7 hours or less.

That is, in the manufacturing method of the embodiment, problems of prior art associated with a high temperature heat treatment (oxidation of a surface of a sintered body and whitening associated therewith) are prevented by adjusting the heat treatment time. Therefore, the heat treatment can be performed in a high temperature range of more than 1100°C effective for removing internal coloring. In other words, according to the manufacturing method of the embodiment, by setting the heat treatment time within a certain range, it is possible to prevent whitening of a surface of a sintered body and to remove internal coloring, and it is possible to further shorten an afterglow time of a ceramic scintillator and to maintain a favorable light output.

In the heat treatment step in the embodiment, a reaction gas containing oxygen and sulfur is used. A method for generating the reaction gas is not particularly limited, but it is preferable to use an oxysulfide powder as a generation source of the reaction gas from a viewpoint of obtaining the reaction gas in an appropriate concentration state of oxygen and sulfur.

For example, a sintered body and the oxysulfide powder are housed in a sealable container, the container is disposed inside a heating furnace in an air atmosphere, and heat treatment is performed. As a result, the oxysulfide powder is decomposed around a heat treatment temperature, and an $SO_x$ gas (for example, $SO_2$ or $SO_3$), a mixed gas of oxygen and sulfur, or the like is generated as the reaction gas. In the embodiment, it is preferable to cause the reaction gas thus obtained to react with the sintered body.

Here, as the oxysulfide powder which is a generation source of the reaction gas, a mixed powder obtained by mixing an oxide powder and a sulfide powder at a predetermined composition ratio may be used. As the oxysulfide powder, a rare earth oxysulfide powder such as a gadolinium oxysulfide ($Gd_2O_2S$) powder or a yttrium oxysulfide ($Y_2O_2S$) powder may be used. Among these, it is preferable to use a gadolinium oxysulfide powder as the oxysulfide powder from a viewpoint of generating oxygen and sulfur at a composition ratio of a gadolinium oxysulfide phosphor. Furthermore, the rare earth oxysulfide powder may be formed of a pure compound, or may have a composition containing an activator, similarly to the gadolinium oxysulfide phosphor.

The sintered body and the oxysulfide powder (particularly, rare earth oxysulfide powder) may be housed in a container having a single structure so as not to be in direct contact with each other, but it is preferable to use a container having a double or more structure. For example, by using a container having a double structure as illustrated in Fig. 2, reaction can be easily controlled, and internal coloring of the sintered body can be removed with good reproducibility.

Fig. 2 is a schematic configuration diagram when a heat treatment step is performed using a container having a double structure in the manufacturing method of the embodiment. For example, a scintillator piece, which is a sintered body 2 after cutting, is housed in a small crucible, which is a second container 1, and an opening of the second container 1 is covered with a small lid 3. Next, the second container 1 is disposed inside a large crucible, which is a first container 4, and an oxysulfide powder 5 is filled in the outside (periphery) of the second container 1 without any gap. In other words, the second container 1 housing the sintered body 2 is embedded in the oxysulfide powder 5. Thereafter, an opening of the first container 4 is sealed with a large lid 6.

Next, a container having a double structure in which the sintered body 2 is housed in the second container 1 and the oxysulfide powder 5 is housed in the first container 4 is disposed inside a heating furnace 7, an atmosphere gas 8 in the heating furnace 7 is set to, for example, an air atmosphere, and a heat treatment is performed at the above-described temperature. By such a heat treatment, a reaction gas (for example, a reaction gas containing oxygen and sulfur as $SO_x$) generated by decomposition of the oxysulfide powder 5 reacts with the sintered body 2, and internal coloring or the like of the sintered body 2 is removed to obtain a ceramic scintillator having a short afterglow time. In addition, whitening of a surface of the sintered body 2 during the heat treatment can be prevented, and an excellent light output of the ceramic scintillator can be maintained.

According to the manufacturing method of the embodiment, since the body color of the sintered body can be set to a predetermined color tone with good reproducibility, it is possible to obtain a ceramic scintillator having an excellent light output and a shortened afterglow time with good reproducibility.

The ceramic scintillator of the embodiment or a ceramic scintillator obtained by the manufacturing method of the embodiment has an excellent light output and a short afterglow time. Therefore, by using such a ceramic scintillator as a fluorescence generating material of a radiation detector, improvement of radiation detection sensitivity, suppression of a pseudo image, and the like can be achieved. This largely contributes to downsizing, resolution enhancement, and the like of the radiation detector.

<Radiation detector and radiation test device>

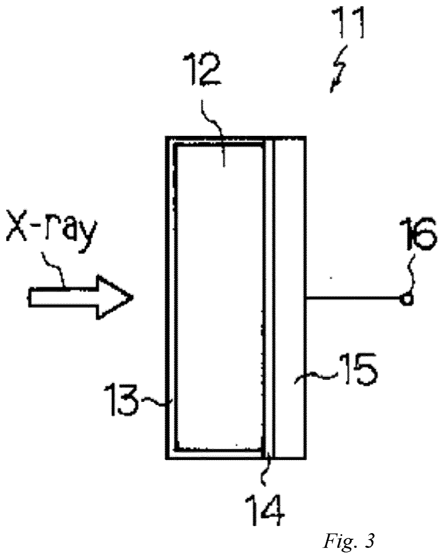

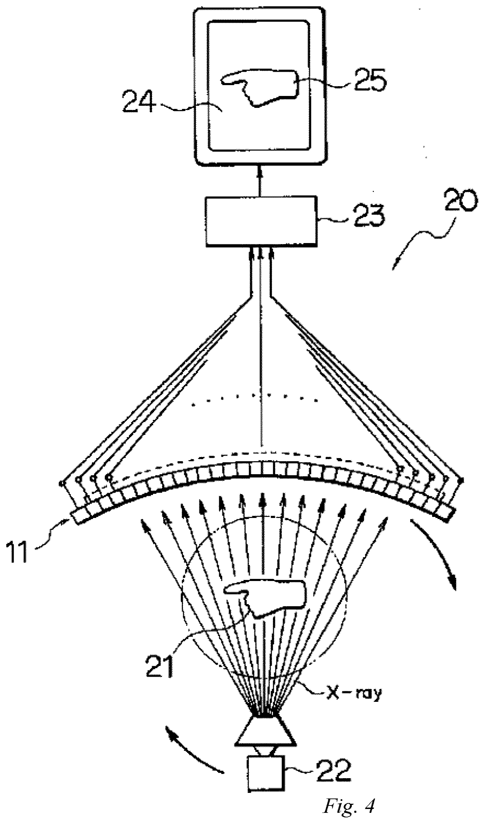

Next, a radiation detector and a radiation test device of an embodiment will be described with reference to Figs. 3 and 4.

Fig. 3 is a schematic configuration diagram illustrating an X-ray detector which is an example of the radiation detector of the embodiment. An X-ray detector 11 illustrated in Fig. 3 includes a ceramic scintillator 12 as a fluorescence generating material. The ceramic scintillator 12 includes, for example, a scintillator piece cut out from a sintered body into a desired shape, or a scintillator block in which a plurality of scintillator pieces are integrated in longitudinal and lateral directions.

The ceramic scintillator 12 having a rectangular rod shape is covered with a reflecting film 13 except for one surface, and a photoelectric conversion element such as a silicon photodiode 15 is attached to a surface not covered with the reflecting film 13 via an adhesive layer 14 as a photoelectric conversion member. Note that when a scintillator block in which a plurality of scintillator pieces are integrated is used as the ceramic scintillator 12, the silicon photodiode 15 is disposed corresponding to each scintillator piece.

In the above-described X-ray detector 11, an X-ray is incident on the ceramic scintillator 12, and the ceramic scintillator 12 emits light according to an incident X-ray dose. Light emitted from the ceramic scintillator 12 is detected by the silicon photodiode 15. Output of light emitted on the basis of the incident X-ray dose is converted into an electrical output by the silicon photodiode 15, and then transmitted from an output terminal 16 to, for example, a computer of an X-ray CT device.

Fig. 4 is a schematic configuration diagram illustrating an X-ray CT device which is an example of the radiation test device of the embodiment. An X-ray CT device 20 illustrated in Fig. 4 includes the above-described X-ray detector 11. The X-ray detector 11 is attached to an inner wall of a cylinder that houses an imaging site of a test object 21. An X-ray tube 22 that emits an X-ray is disposed substantially at a center of an arc to which the X-ray detector 11 is attached.

The fixed test object 21 is disposed between the X-ray detector 11 and the X-ray tube 22. The X-ray detector 11 and the X-ray tube 22 are configured to rotate about the fixed test object 21 while performing X-ray imaging. In this way, image information of the test object 21 is three-dimensionally collected from different angles.

A signal obtained by the X-ray imaging (an electric signal converted by the silicon photodiode 15) is processed by a computer 23 and displayed as a test object image 25 on a display 24. The test object image 25 is, for example, a tomographic image of the test object 21. At this time, by using a scintillator block in which a plurality of scintillator pieces are integrated as the ceramic scintillator 12, a multi-tomographic X-ray CT device is configured, and this makes it possible to simultaneously photograph a plurality of tomographic images of the test object 21. According to such a multi-tomographic X-ray CT device, it is also possible to three-dimensionally depict an imaging result.

In the X-ray CT device 20 as described above, since the ceramic scintillator having a short afterglow time is used, appearance of a simulated image or the like can be effectively prevented. In addition, since an output from each ceramic scintillator is also high, resolution can be improved, for example. As a result, medical diagnostic performance of the X-ray CT device 20 can be largely enhanced.

The radiation test device of the embodiment can be applied not only to an X-ray test device for medical diagnosis but also to an X-ray non-destructive test device for industrial use. The radiation test device of the embodiment also contributes to improvement of test accuracy by an X-ray non-destructive test device.

EXAMPLES

Next, specific Examples of the embodiments and evaluation results thereof will be described.

[Example 1]

A gadolinium oxysulfide phosphor powder having an average particle size of 10 $\mu$m and a composition of $(Gd_{0.999}, Pr_{0.001})_2O_2S$ was molded by a rubber press. The molded body was sealed in a Ta capsule and then set in a HIP treatment apparatus. An argon gas as a pressurizing medium was sealed in the HIP treatment apparatus and treatment was performed under conditions of a pressure of 148 MPa and a temperature of 1500°C for three hours to prepare a sintered body.

After cooling, the sintered body was taken out, and a rod-shaped sample of 1 x 2 $\times$ 30 mm was cut out from the sintered body by a blade saw to prepare a plurality of scintillator pieces.

Next, as illustrated in Fig. 2, a plurality of scintillator pieces were housed in a second container (small crucible:

capacity: 500cc) made of high purity alumina, and an opening of the second container was covered with a small lid. A first container (large crucible) made of high purity alumina and slightly larger than the second container was prepared, the second container housing the scintillator pieces was disposed in the first container, and a gadolinium oxysulfide ($Gd_2O_2S$) powder as an oxysulfide powder was filled in the periphery of the second container without any gap. Thereafter, an opening of the first container was sealed with a large lid.

Next, a container having a double structure in which the second container was housed inside the first container was disposed inside the heating furnace 7, and a heat treatment was performed in an air atmosphere for 1 hour. In this heat treatment step, the oxysulfide powder filled in the first container so as to cover the periphery of the second container was decomposed to generate a reaction gas containing oxygen and sulfur. By causing this reaction gas to react with the scintillator pieces, a ceramic scintillator of Example 1 made of a sintered body was prepared.

[Example 2]

A ceramic scintillator of Example 2 was prepared in a similar manner to Example 1 except that the heat treatment was performed for 5 hours.

[Example 3]

A ceramic scintillator of Example 3 was prepared in a similar manner to Example 1 except that the heat treatment was performed for 7 hours.

[Example 4]

A ceramic scintillator of Example 4 was prepared in a similar manner to Example 1 except that the heat treatment was performed for 10 hours.

[Example 5]

A ceramic scintillator of Example 5 was prepared in a similar manner to Example 1 except that the heat treatment was performed for 12 hours.

[Example 6]

A ceramic scintillator of Example 6 was prepared in a similar manner to Example 1 except that the heat treatment was performed for 14 hours.

[Comparative Example 1]

A ceramic scintillator of Comparative Example 1 was prepared in a similar manner to Example 1 except that the scintillator pieces were not subjected to the heat treatment.

[Comparative Example 2]

A ceramic scintillator of Comparative Example 2 was prepared in a similar manner to Example 1 except that a gadolinium oxysulfide phosphor powder having a composition of $(Gd_{0.9989}, Pr_{0.0009}, Ce_{0.0002})_2O_2S$ was used instead of the gadolinium oxysulfide phosphor powder having a composition of $(Gd_{0.999}, Pr_{0.001})_2O_2S$.

[Example 7]

A ceramic scintillator of Example 7 was prepared in a similar manner to Comparative Example 2 except that the heat treatment was performed for 5 hours.

[Measurement of body color]

A body color of each of the ceramic scintillators (sintered bodies) of Examples 1 to 7 and Comparative Examples 1 and 2 was measured on the basis of the above-described method. Measurement results are presented in Table 1.

Note that Fig. 1 is a graph obtained by plotting xy chromaticity coordinates indicating the body colors of the ceramic scintillators of Examples 1 to 7 and Comparative Examples 1 and 2. In Fig. 1, ○ is a result of Example, and △ is a result of Comparative Example.

In addition, for each of the ceramic scintillators of Examples 1 to 7 and Comparative Examples 1 and 2, in addition to the measurement positions described above, body colors at arbitrary four positions were measured similarly. That is, body colors at a total of five positions were measured on one surface (front surface) of the ceramic scintillator. The five measurement positions were separated from each other by 5 mm or more. Furthermore, also for a surface (back surface) opposite to the front surface, body colors at arbitrary five positions separated from each other by 5 mm or more were measured. In each of the ceramic scintillators of Examples 1 to 7 and Comparative Examples 1 and 2, a difference between a maximum value and a minimum value of the x value at a total of ten measurement positions (five positions on the front surface and five positions on the back surface) was 0.01 or less, and a difference between a maximum value and a minimum value of the y value at a total of ten measurement positions was also 0.01 or less. That is, a color difference of the sintered body was small.

[Measurement of light output and afterglow]

Next, the X-ray detector illustrated in Fig. 3 was configured for each of the ceramic scintillators of Examples 1 to 7 and Comparative Examples 1 and 2. A current value passing through a silicon photodiode when the X-ray detector was irradiated with an X-ray of 120 kVP and 200 mA was measured. A relative value in a case where a current value when a scintillator made of a single crystal of cadmium tungstate ($CdWO_4$) was used for the X-ray detector was 100 was taken as a light output of each of the ceramic scintillators of Examples 1 to 7 and Comparative Examples 1 and 2.

In addition, an emission intensity $I_0$ during X-ray irradiation and an emission intensity $I_{10}$ after an elapse of 10 ms from stop of the X-ray irradiation were measured. A ratio of $I_{10}$ to $I_0$ was calculated and taken as an afterglow intensity.

Measurement results are presented in Table 1.

[Table 1]

| Table 1 | Composition of gadolinium oxysulfide phosphor powder | Heat treatment time [hour] | Body color | | Light output [%] | Afterglow intensity [%] |
|---|---|---|---|---|---|---|
| | | | x | y | | |
| Example 1 | $(Gd_{0.999},Pr_{0.001})_2O_2S$ | 1 | 0.403 | 0.422 | 169 | 0.011 |
| Example 2 | $(Gd_{0.999},Pr_{0.001})_2O_2S$ | 5 | 0.416 | 0.434 | 177 | 0.012 |
| Example 3 | $(Gd_{0.999},Pr_{0.001})_2O_2S$ | 7 | 0.412 | 0.430 | 176 | 0.016 |
| Example 4 | $(Gd_{0.999},Pr_{0.001})_2O_2S$ | 10 | 0.421 | 0.434 | 179 | 0.005 |
| Example 5 | $(Gd_{0.999},Pr_{0.001})_2O_2S$ | 12 | 0.420 | 0.434 | 182 | 0.005 |
| Example 6 | $(Gd_{0.999},Pr_{0.001})_2O_2S$ | 14 | 0.415 | 0.432 | 180 | 0.007 |
| Comparative Example 1 | $(Gd_{0.999},Pr_{0.001})_2O_2S$ | 0 | 0.399 | 0.420 | 148 | 0.049 |
| Comparative Example 2 | $(Gd_{0.9989},Pr_{0.0009},Ce_{0.0002})_2O_2S$ | 1 | 0.395 | 0.411 | 90 | 0.018 |
| Example 7 | $(Gd_{0.9989},Pr_{0.0009},Ce_{0.0002})_2O_2S$ | 5 | 0.409 | 0.420 | 102 | 0.006 |

As is apparent from Table 1 and Fig. 1, the ceramic scintillators of Examples 1 to 7 had body colors satisfying the above formulas (1) and (2).

In the ceramic scintillators of Examples 1 to 6, as compared with the ceramic scintillator of Comparative Example 1, a light output was about 1.14 to 1.22 times larger, and an afterglow intensity after an elapse of 10 ms was about 0.10 to 0.33 times smaller. In addition, in the ceramic scintillator of Example 7, as compared with the ceramic scintillator of Comparative Example 2, a light output was about 1.13 times larger, and an afterglow intensity after an elapse of 10 ms was about 0.33 times smaller.

As described above, it is found that the ceramic scintillator of the embodiment suppresses a decrease in light output while suppressing an increase in afterglow time.

Furthermore, it has also been found that the ceramic scintillators of Examples 1 to 6 which do not contain a co-activator have a relatively larger light output as compared with the ceramic scintillator of Example 7 which contains Ce as a co-activator, and are more suitable for suppressing a decrease in light output.

Although some embodiments of the present invention have been described, these embodiments have been presented as examples, and are not intended to limit the scope of the invention. These novel embodiments can be implemented in various other forms, and various omissions, substitutions, and changes can be made without departing from the gist of the invention. These embodiments and modifications thereof are included in the scope and gist of the invention, and are included in the invention described in the claims and an equivalent scope thereof.

REFERENCE SIGNS LIST

| | |
|---|---|
| 1 | Second container (small crucible) |
| 2 | Sintered body (scintillator piece) |
| 3 | Small lid |
| 4 | First container (large crucible) |
| 5 | Oxysulfide powder |
| 6 | Large lid |
| 7 | Heating furnace |
| 8 | Atmosphere gas |
| 11 | X-ray detector |
| 12 | Ceramic scintillator |
| 13 | Reflecting film |
| 14 | Adhesive layer |
| 15 | Silicon photodiode |
| 16 | Output terminal |
| 20 | X-ray CT device |
| 21 | Test object |
| 22 | X-ray tube |
| 23 | Computer |
| 24 | Display |
| 25 | Test object image |

**Claims**

1. A ceramic scintillator comprising a sintered body of a gadolinium oxysulfide phosphor containing praseodymium as a main activator, wherein
   when a body color of the sintered body is represented by chromaticity coordinates (x, y) based on a CIE1931 chromaticity value, the sintered body has a body color satisfying

$$0.4 \leq x \leq 0.505 \quad \ldots(1)$$

   and

$$0.83x + 0.075 \leq y \leq 0.83x + 0.095 \quad \ldots(2).$$

2. The ceramic scintillator according to claim 1, wherein
   when a body color of the sintered body is represented by chromaticity coordinates (x, y) based on a CIE1931 chromaticity value, the sintered body has a body color further satisfying

$$0.4 \leq x \leq 0.42 \quad \ldots(1a)$$

   and

$$0.83x + 0.075 \leq y \leq 0.83x + 0.095 \quad \ldots(2).$$

3. The ceramic scintillator according to claim 1 or 2, wherein

   the gadolinium oxysulfide phosphor has a composition represented by

   general formula: $(Gd_{1-a-b}Pr_aCe_b)_2O_2S$      (A)

in the formula, a is a number satisfying $0.0001 \leq a \leq 0.01$, and b is a number satisfying $0 \leq b \leq 0.005$.

4. A method for manufacturing the ceramic scintillator according to claim 1 or 2, the method comprising

a heat treatment step of causing a reaction gas containing oxygen and sulfur to react with the sintered body, wherein
a heat treatment time in the heat treatment step is 1 hour or more and 50 hours or less.

5. The method for manufacturing a ceramic scintillator according to claim 4, wherein
the heat treatment step is performed at a temperature in a range of 900°C or more and 1600°C or less.

6. The method for manufacturing a ceramic scintillator according to claim 4, wherein
the heat treatment step is performed at a temperature in a range of more than 1100°C and less than 1300°C.

7. The method for manufacturing a ceramic scintillator according to claim 4, wherein
the heat treatment step is performed while the sintered body and an oxysulfide powder are housed inside a container.

8. The method for manufacturing a ceramic scintillator according to claim 7, wherein

the container has a double or more structure including a first container and a second container inside the first container, and
the heat treatment step is performed while the sintered body is housed inside the second container, and the oxysulfide powder is housed outside the second container and inside the first container.

9. The method for manufacturing a ceramic scintillator according to claim 7, wherein
the oxysulfide powder is a gadolinium oxysulfide powder.

10. A radiation detector comprising the ceramic scintillator according to claim 1 or 2.

11. A radiation test device comprising the radiation detector according to claim 10.

*Fig. 1*

*Fig. 2*

*Fig. 3*

*Fig. 4*

## INTERNATIONAL SEARCH REPORT

International application No.

**PCT/JP2024/009361**

### A. CLASSIFICATION OF SUBJECT MATTER

*C09K 11/84*(2006.01)i; *C04B 35/50*(2006.01)i; *C09K 11/00*(2006.01)i; *C09K 11/08*(2006.01)i; *G01T 1/20*(2006.01)i; *G21K 4/00*(2006.01)i

FI: C09K11/84; C09K11/00 E; C09K11/08 B; C04B35/50; G21K4/00 B; G01T1/20 E; G01T1/20 B

According to International Patent Classification (IPC) or to both national classification and IPC

### B. FIELDS SEARCHED

Minimum documentation searched (classification system followed by classification symbols)

C09K11/84; C04B35/50; C09K11/00; C09K11/08; G01T1/20; G21K4/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | WO 2016/047139 A1 (KABUSHIKI KAISHA TOSHIBA) 31 March 2016 (2016-03-31) claims, paragraphs [0004], [0030], [0073]-[0088], examples, etc. | 1-6, 10-11 |
| Y | | 7-9 |
| X | WO 2017/078051 A1 (KABUSHIKI KAISHA TOSHIBA) 11 May 2017 (2017-05-11) claims, paragraphs [0004], [0022], [0058]-[0071], examples, etc. | 1-6, 10-11 |
| Y | | 7-9 |
| Y | JP 2002-275465 A (KABUSHIKI KAISHA TOSHIBA) 25 September 2002 (2002-09-25) see claims, paragraphs [0050]-[0060], fig. 2, examples, etc. | 7-9 |
| Y | JP 2000-171563 A (KABUSHIKI KAISHA TOSHIBA) 23 June 2000 (2000-06-23) claims, paragraphs [0030]-[0034], fig. 1, examples, etc. | 7-9 |
| A | WO 2015/053033 A1 (HITACHI METALS, LTD.) 16 April 2015 (2015-04-16) claims, examples, etc. | 1-11 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 April 2024** | **07 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**

| International application No. |
| --- |
| **PCT/JP2024/009361** |

| C. | DOCUMENTS CONSIDERED TO BE RELEVANT | |
| --- | --- | --- |
| Category* | Citation of document, with indication, where appropriate, of the relevant passages | Relevant to claim No. |
| A | JP 2000-178547 A (HITACHI METALS, LTD.) 27 June 2000 (2000-06-27) <br> claims, examples, etc. | 1-11 |
| A | JP 6-201834 A (KABUSHIKI KAISHA TOSHIBA) 22 July 1994 (1994-07-22) <br> claims, examples, etc. | 1-11 |

Form PCT/ISA/210 (second sheet) (July 2022)

**INTERNATIONAL SEARCH REPORT**
Information on patent family members

International application No.

**PCT/JP2024/009361**

| Patent document cited in search report | | | Publication date (day/month/year) | Patent family member(s) | | | Publication date (day/month/year) |
|---|---|---|---|---|---|---|---|
| WO | 2016/047139 | A1 | 31 March 2016 | US 2017/0199285 A1<br>claims, paragraphs [0005],<br>[0035], [0078]-[0089],<br>examples, etc.<br>EP 3200194 A1<br>CN 106796822 A | | | |
| WO | 2017/078051 | A1 | 11 May 2017 | US 2018/0252824 A1<br>claims, paragraphs [0005],<br>[0041], [0077]-[0087],<br>examples, etc.<br>EP 3372654 A1<br>CN 108350358 A | | | |
| JP | 2002-275465 | A | 25 September 2002 | (Family: none) | | | |
| JP | 2000-171563 | A | 23 June 2000 | US 6384417 B1<br>claims, column 4, line 50<br>to column 5, line 55, fig. 2,<br>examples, etc. | | | |
| WO | 2015/053033 | A1 | 16 April 2015 | US 2016/0251573 A1<br>claims, examples, etc.<br>EP 3056555 A1<br>CN 105637062 A | | | |
| JP | 2000-178547 | A | 27 June 2000 | (Family: none) | | | |
| JP | 6-201834 | A | 22 July 1994 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S58204088 A
- JP H6201834 A
- JP 2000171563 A